# EUROPÄISCHE PATENTANMELDUNG

(11) **EP 4 160 164 A1**
(43) Veröffentlichungstag der Anmeldung: **05.04.2023**
(21) Anmeldenummer: 21020491.3
(22) Anmeldetag: 29.09.2021
(51) Int. Cl.: G01F 25/10, G01F 1/78

(54) **VERFAHREN UND SYSTEM ZUR KALIBRATION EINER DURCHFLUSSMESSUNG**

(71) Anmelder: Linde GmbH, 82049 Pullach (DE)
(72) Erfinder: Hell, Johannes, 82049 Pullach (DE); Fahrner, Daniel, 82049 Pullach (DE); Vidic, Karl Jojo, 82049 Pullach (DE)
(74) Vertreter: Fischer, Werner

(57) **Zusammenfassung**

Es werden ein Verfahren zur Kalibration einer Durchflussmessung zur Ermittlung einer Menge eines Fluids und ein entsprechendes System vorgeschlagen, wobei eine Masse des der Durchflussmessung unterworfenen Fluids gravimetrisch bestimmt wird und mit einem Ergebnis der Durchflussmessung verglichen wird. Es ist vorgesehen, dass die gravimetrische Bestimmung innerhalb eines abgeschlossenen Messraums durchgeführt wird, wobei der abgeschlossene Messraum während der gravimetrischen Bestimmung mit einem Inertgas gefüllt ist, und das der Durchflussmessung unterworfene Fluid in einen oder mehrere, der gravimetrischen Bestimmung unterworfene Fluidbehälter in dem Messraum eingeleitet wird.

## Beschreibung

Die Erfindung betrifft ein Verfahren zur Kalibration einer Durchflussmessung sowie ein System zu dessen Durchführung.

Im Rahmen von Anstrengungen zum Klimaschutz werden immer stärker fossile Brennstoffe verdrängt und durch Wasserstoff als Treibstoff ersetzt. Da Wasserstoff ein Gas mit sehr geringem Molekülquerschnitt und geringer Dichte ist, kann er nur in speziell dafür vorgesehenen Druckbehältern wirtschaftlich sinnvoll gelagert und transportiert werden, um Diffusion aus dem Behälter zu minimieren und das Volumen möglichst klein zu halten.

Typischerweise wird Wasserstoff in großen Mengen zentral hergestellt, so dass für die Versorgung von Endabnehmern und insbesondere von mobilen Verbrauchern Umfüllprozesse bzw. Betankungen erforderlich sind.

Wasserstoffdruckbehälter können grundsätzlich auf zwei verschiedene Arten befüllt werden; durch die direkte Verdichtung des Wasserstoffes von einem Kompressor in die Wasserstoffdruckbehälter (für niedrigere Betankungsgeschwindigkeiten) oder durch Zwischenspeicherung in Hochdruckbehältern. Durch die Öffnung eines Betankungsventils zwischen Hochdruckbehälter und zu betankendem Behälter stellt sich, aufgrund der Druckdifferenz der beiden Wasserstoffdruckbehälter, ein Fluss hinzu dem Druckbehälter, welcher ein niedrigeres Druckniveau besitzt (negativer Druckgradient), ein. Diese Betankung (Druckausgleichprozess) findet solange statt, bis der Druckgradient einen Wert von nahe 0 aufweist (z.B. einen Schwellwert erreicht) oder der Maximaldruck im zu füllenden Wasserstoffdruckbehälter erreicht ist.

Aufgrund der geringen Dichte von Wasserstoff ist die Bestimmung einer bei einem Betankungsvorgang abgegebenen Menge anspruchsvoll. Zur Durchflussmessung eines Wasserstoffstromes kann beispielsweise das Coriolis-Messprinzip verwendet werden, welches darauf beruht, dass ein Fluid durch einen von zwei Rohrbögen strömt. Weiters werden die zwei Rohrbogen synchron durch Aktoren in Schwingung versetzt. Durch Einleitung eines Mediums in den einen der Rohrbögen verändert sich die Schwingung der Rohrbögen zueinander. Durch an den Rohrbögen angeschlossene Sensorik kann die Phasenverschiebung der Sinusschwingungen ermittelt und davon direkt auf den Massendurchfluss geschlossen werden. Werden jedoch, wie zu erwarten ist, eine Vielzahl von Betankungspunkten, jeweils mit entsprechender Messeinheit in der Fläche verteilt errichtet, ergibt sich ein Bedarf für Kalibrationssysteme, um die jeweiligen Messsysteme entsprechend genau einzustellen und regelmäßig zu überprüfen. Bevorzugt werden solche Kalibrationssysteme mobil bereitgestellt.

Diese Aufgabe wird durch Verfahren und Systeme gemäß den unabhängigen Patentansprüchen gelöst. Vorteilhafte Weiterbildungen und Ausführungsformen sind Gegenstand der jeweiligen Unteransprüche sowie der nachfolgenden Beschreibung.

Im Rahmen eines erfindungsgemäßen Verfahrens zur Kalibration einer Durchflussmessung zur Ermittlung einer Menge eines Fluids wird eine Masse des der Durchflussmessung unterworfenen Fluids gravimetrisch bestimmt und mit einem Ergebnis der Durchflussmessung verglichen. Das Verfahren ist dadurch gekennzeichnet, dass die gravimetrische Bestimmung innerhalb eines abgeschlossenen Messraums durchgeführt wird, wobei der abgeschlossene Messraum während der gravimetrischen Bestimmung mit einem Inertgas gefüllt ist, und das der Durchflussmessung unterworfene Fluid in einen oder mehrere, der gravimetrischen Bestimmung unterworfene Fluidbehälter in dem Messraum eingeleitet wird. Dadurch wird verhindert, dass die Kalibration durch eine durch Druckunterschiede während der Durchflussmessung induzierte Kondensatbildung an einer Außenwand des einen oder der mehreren Fluidbehälter verfälscht wird. Zudem wird ein gleichbleibender, ggf. bekannter, fluidstatischer Auftrieb gewährleistet.

Insbesondere weist dabei der abgeschlossene Messraum einen höheren Druck als eine den geschlossenen Messraum umgebende Atmosphäre auf. Dies verhindert zuverlässig den Zutritt von unerwünschten Bestandteilen der Atmosphäre, beispielsweise von Luftfeuchtigkeit

Das Inertgas umfasst vorteilhafterweise ein Edelgas und/oder Stickstoff. Dadurch wird einer Korrosion von Komponenten innerhalb des Messraums entgegengewirkt, was sich positiv auf Standzeit und Messgenauigkeit der verwendeten Instrumente auswirkt.

Der geschlossene Messraum wird bevorzugt vor und/oder während und/oder nach der gravimetrischen Bestimmung mit dem Inertgas gespült. Dadurch können eventuell durch Leckagen eingetragene Verunreinigungen vermindert werden.

Das Fluid umfasst insbesondere Wasserstoff oder besteht insbesondere aus Wasserstoff. Dieser stellt eine besondere Herausforderung in Bezug auf Messung und Dichtigkeit dar, da Wasserstoffmoleküle sehr klein und daher sehr diffusionsfreudig sind und andererseits Wasserstoff eine sehr geringe Dichte aufweist und daher kleine Fehler in der gravimetrischen Bestimmung große Ungenauigkeiten in Bezug auf das kalibrierte Volumen bedingen. Gleichzeitig wird Wasserstoff voraussichtlich in Zukunft eine immer wichtigere Rolle in Bezug auf die Energieversorgung von Endverbrauchern spielen und damit eine große Anzahl von präzisen Messvorrichtungen benötigt werden.

Die gravimetrische Bestimmung wird bevorzugt mit einer gravimetrischen Messeinheit durchgeführt, die einen Messfehler von weniger als 3%, 1%, 0,3%, 0,1% oder 0,01%, jeweils bezogen auf die Menge des Fluids, aufweist. Damit können relevante gesetzliche Vorgaben (z.B. Eichung) sicher eingehalten werden. Die Menge des Fluids kann beispielsweise durch geeignete Wahl des bzw. der Fluidbehälter limitiert werden.

Insbesondere wird ein Ergebnis der Durchflussmessung auf Basis eines Ergebnisses des Vergleichs mit der gravimetrischen Bestimmung so angepasst, dass eine Abweichung zwischen dem Ergebnis der gravimetrischen Bestimmung und einem Ergebnis der Durchflussmessung minimiert wird. Typischerweise sind gravimetrische Messungen sehr präzise möglich, so dass eine volumenbasierte Messung z.B. auf Basis einer Wägung kalibriert werden kann, um die Genauigkeit zu steigern.

Ein erfindungsgemäßes System zur Kalibration einer Durchflussmessung zur Ermittlung einer Menge eines Fluids, ist für die Durchflussmessung mit einer Durchflussmesseinrichtung und für die Kalibration mit einer gravimetrischen Messeinheit, die dazu eingerichtet ist, eine Masse eines oder mehrerer Fluidbehälter bzw. dessen oder deren Inhalts zu bestimmen, ausgestattet, und ist gekennzeichnet durch einen geschlossenen Messraum, der die gravimetrische Messeinheit umschließend angeordnet ist, und eine Gaseinspeiseeinrichtung, die dazu eingerichtet ist, den geschlossenen Messraum mit einem Inertgas zu beaufschlagen, während die gravimetrische Messeinheit eine Massenbestimmung durchführt. Das System umfasst bevorzugt ferner eine Recheneinheit, die dazu eingerichtet ist, erste Messdaten von der gravimetrischen Messeinheit sowie zweite Messdaten von der Durchflussmesseinrichtung zu empfangen und miteinander zu vergleichen. Die Recheneinheit ist dabei vorteilhafterweise ferner dazu eingerichtet ist, die Durchflussmesseinrichtung so zu kalibrieren, dass eine Abweichung zwischen den ersten und zweiten Messdaten minimiert wird. Insbesondere umfasst das System ferner Mittel, die das System zur Durchführung eines wie vorstehend beschriebenen Verfahrens ertüchtigen. Das System ist somit insbesondere in der Lage ein erfindungsgemäßes Verfahren bzw. dessen vorteilhafte Ausgestaltungen durchzuführen. Das System profitiert daher sinngemäß entsprechend von den in Bezug auf das Verfahren beschriebenen Vorteilen. Hier und nachfolgend werden zur Verbesserung der Übersichtlichkeit daher Merkmale und Vorteile, die in Bezug auf eine Ausgestaltung eines erfindungsgemäßen Verfahrens erläutert sind, nicht gesondert für entsprechende Ausgestaltungen des erfindungsgemäßen Systems wiederholt und umgekehrt.

Bevorzugt wird der Messraum, ggf. inklusive der Gaseinspeisevorrichtung und/oder der Recheneinheit, mobil bereitgestellt, beispielsweise in Form eines entsprechend eingerichteten Containers.

### Figurenbeschreibung

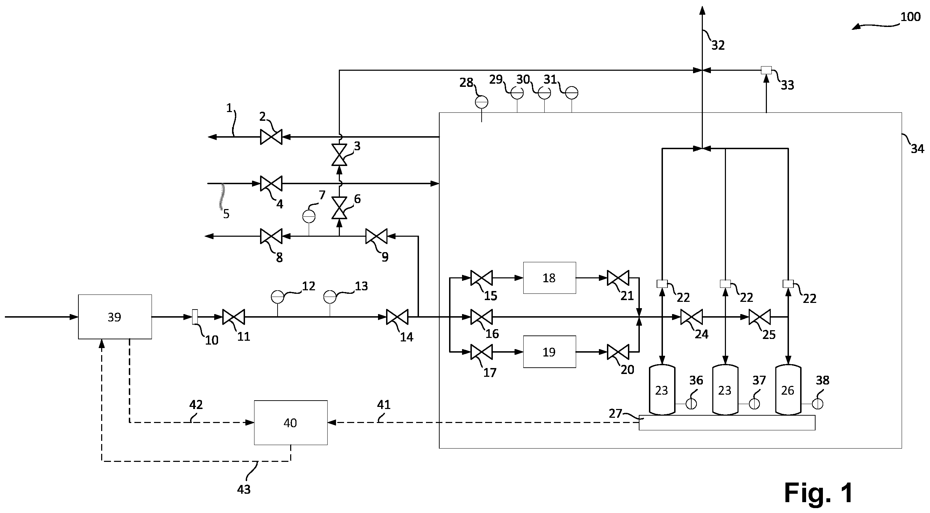

Figur 1 zeigt eine vorteilhafte Ausgestaltung der Erfindung in Form eines vereinfachten Blockdiagramms.

### Ausgestaltungen der Erfindung

In der Beschreibung verwendete Bezugszeichen, die sich auf Vorrichtungskomponenten beziehen werden ebenso zur Bezeichnung von in der jeweiligen Vorrichtungskomponente durchgeführte Verfahrensschritte verwendet und umgekehrt.

In Figur 1 ist eine vorteilhafte Ausgestaltung der Erfindung in Form eines vereinfachten Blockdiagramms dargestellt und insgesamt mit 100 bezeichnet. Das System 100 umfasst eine gravimetrische Messeinheit 27, die zur Massenbestimmung von Fluidbehältern 23, 26 eingerichtet ist, in einem Messraum 34 sowie eine Durchflussmesseinrichtung 39, außerhalb des Messraums 34, die zur Mengenbestimmung eines in die Fluidbehälter 23, 26 geleiteten Fluids, das insbesondere Wasserstoff umfasst oder ist, eingerichtet ist. Optional kann auch eine weitere Durchflussmesseinrichtung 18, 19 innerhalb des Messraums 34 vorgesehen sein. Die Durchflussmesseinrichtung(en) 39, 18, 19 kann bzw. können insbesondere in Form der eingangs erwähnten Coriolisbögen ausgestaltet sein.

Der Messraum 34 ist gegen die ihn umgebende Atmosphäre abgedichtet, um insbesondere das Eindringen von Luft mit darin enthaltener Luftfeuchtigkeit zu verhindern. Ferner ist eine Gaseinspeiseeinrichtung 4 vorgesehen, die dazu eingerichtet ist, ein Inertgas 5, beispielsweise Stickstoff oder Argon, in den Messraum einzuleiten. Ferner ist das System 100 in dem gezeigten Beispiel dazu eingerichtet, den Messraum 34 zu spülen, insbesondere auch während einer laufenden Messung. Dazu kann das Inertgas 5 dem Messraum über ein Spülventil 2 entnommen werden. In einigen Ausgestaltungen ist das Spülventil 2 und/oder das Ventil 4 der Gaseinspeiseeinrichtung so eingestellt bzw. einstellbar, dass sich in dem Messraum ein stabiler Überdruck im Bereich von 10 bis 100 kPa, insbesondere von 30 bis 75 kPa, beispielsweise 50 kPa, im Vergleich zu der umgebenden Atmosphäre ergibt. Dadurch kann einerseits Kondensation von bestimmten Bestandteilen der Atmosphäre, beispielsweise Luftfeuchtigkeit oder ggf. auch Sauerstoff oder Kohlenstoffdioxid verhindert werden, die das Messergebnis der Massenbestimmung beeinflussen könnte, andererseits kann die Zusammensetzung der Atmosphäre innerhalb des Messraumes 34 so kontrolliert werden, dass ein Auftrieb der Fluidbehälter 23, 26 bekannt ist und somit bei der Massenermittlung berücksichtigt werden kann. Dadurch wird eine erhebliche Präzisionssteigerung der Massenbestimmung im vergleich zu offenen Systemen ermöglicht. Zur Überwachung können Sensoren 28, 29, 30, 31 vorgesehen sein, insbesondere Temperatur, Druck und/oder chemische Sensoren, die die physikalischen Eigenschaften und/oder chemische Zusammensetzung der Atmosphäre innerhalb und ggf. auch außerhalb des Messraumes 34 überwachen und bevorzugt an eine Recheneinheit 40 senden, die zur Anzeige der Werte und/oder zur Steuerung entsprechender Ventile eingerichtet sein kann.

Über einen Betankungszapfpunkt 10 ist die Mess- bzw. Kalibrationsvorrichtung an eine Betankungskupplung einer Wasserstoffbetankungsanlage, die zu kalibrieren ist, angeschlossen bzw. anschließbar. Die in der Figur eingezeichneten Ventile 11 und 14 stellen hier die Hauptbetankungsventile dar, mit denen Wasserstoffdruckbehälter gemäß der Betankungsnorm SAE 2601 auf die benötigte Menge betankt werden können. Mit einem Drucktransmitter 12 und einem Temperaturtransmitter 13 werden insitu ie Messwerte aufgenommen, welche als zusätzliche Indikatoren für die Qualität der Betankung herangezogen werden können. Über die Hauptbetankungsleitung können durch Öffnung eines, insbesondere pneumatischen, Ventils 16 die Wasserstoffdruckbehälter 23, 26 direkt betankt werden. Alternativ dazu können die Ventile 15 und 17 geöffnet und Ventil 16 geschlossen werden, wenn eine zusätzliche Messwertaufnahme mit den Massendurchflussmessern 18 und 19 gewünscht ist. Diese Massendurchflussmesser 18, 19 können als Mastermeter verwendet werden, was bei ordnungsgemäßer Kalibrierung dieser eine alternative Methode zur Messwerterfassung der betankten Wasserstoffmenge zur gravimetrischen Messung (27) darstellt. Diese Messwerte können untereinander verglichen werden. Die Ventile 20 und 21 dienen als Rückschlagventile, sodass die Massendurchflussmesser 18, 19 nicht rückwärts durchströmt werden, was zu einem falschen Messergebnis führen würde.

Die Wasserstoffdruckbehälter 23, 26 sind in dem gezeigten Beispiel in drei Sektionen unterteilt; die ersten beiden Sektionen (23) haben jeweils zwei Wasserstoffdruckbehälter mit einem Volumen von 0,072 m³ und können jeweils 2,89 kg, bezogen auf 70 MPa und 288,15 K, betankt werden. Die erste und zweite Sektion sind jeweils identisch aufgebaut, die zweite Sektion kann durch ein (Hand)ventil 24 zugeschalten werden. Die dritte Sektion (26) besteht aus drei Wasserstoffdruckbehältern, besitzt ein Volumen von 0,108 m³, folglich können 4,33 kg, bezogen auf 70 MPa und 288,15 K, betankt werden. Gesamt ergibt sich somit eine mögliche Betankungsmenge von 10,12 kg, die dritte Sektion kann durch ein weiteres (Hand)ventil 25 zugeschalten werden. Jede Sektion ist gegen Überdruck (z.B. > 87,5 MPa) mithilfe eines Sicherheitsventils 22 abgesichert, damit der jeweilige Wasserstoffdruckbehälter 23, 26 keinen Schaden nimmt. Sollte eines der Sicherheitsventile 22 ansprechen, wird der Wasserstoff über eine Kaminleitung 32 in die Umgebung außerhalb des Messraums 34 abgelassen.

Ferner sind die Wasserstoffdruckbehälter 23, 26 jeweils mit einem Druck- und Temperatursensor 36, 37, 38 ausgestattet, welcher die aktuell vorherrschenden Parameter im jeweiligen Wasserstoffdruckbehälter 23, 26 während der Betankung überwacht. Die Sensoren 36, 37, 38 sind dabei so angeordnet, dass diese Messwerte der tatsächlichen aktuellen Temperatur im Tank entsprechen. Um die Wasserstoffdruckbehälter 23, 26 nach der Betankung zu entlasten, sind (Hand)ventile 3, 6 und 9 vorgesehen, die geöffnet werden können, um den jeweiligen Tankinhalt in die Kaminleitung 32 abzulassen. Über ein Manometer 7 kann zusätzlich der Druck in der Zuleitung überwacht werden, sollte der Drucktransmitter in der Betankungsleitung 12 beschädigt sein oder keine Werte liefern. Das Gehäuse des Messraums 34 ist, wie erwähnt, mit einem chemischen Sensor 28, beispielsweise einem Wasserstoffsensor 28, einem Drucksensor oder Manometer 29 und zwei Umgebungstemperatursensoren 30 und 31 ausgerüstet, um die Bedingungen während der Betankungen innerhalb des Messraumes dokumentieren zu können. Das Manometer 29 dient zusätzlich zur Visualisierung des Überdruckes im Messraum 34. Fällt dieser Überdruck ab, kann keine genaue Messung gewährleistet werden. Sollte im Fehlerfall dennoch der Druck im Messraum 34 rapide ansteigen, ist eine mechanische Überdrucksicherung 33 vorgesehen, die den nötigen Druckausgleich schafft. Alle Leitungen, welche Wasserstoff aus dem System kontrolliert oder im Fehlerfall ablassen, sind mit der Kaminleitung 32 verbunden, deren Auslass sich bevorzugt außerhalb einer Ex-Zone des Systems 100 befindet, damit sich keine explosionsfähige Atmosphäre bilden kann.

Die Erfindung ist in einigen Ausgestaltungen präzise genug um auch für Eichungen, insbesondere auch Ersteichungen von Wasserstofftankanlagen verwendet werden zu können. Für die Eichfähigkeit der Betankungsanlage ist eine genaue Messung des Massenstromes durch den Massendurchflussmesser unabdingbar. Die Messung des Massenstromes lässt sich durch einen Coriolis- Massendurchflussmesser durchführen. Um eine Anlage durch Ersteichung entsprechend Konformität mit den jeweils einschlägigen Regularien zuzulassen, ist ein Normal notwendig, mit dem der Wert der gemessenen Masse des Massendurchflussmessers abgeglichen werden kann. Liegt dieser Wert innerhalb der Eichfehlergrenzen gilt das System laut der Konformität als geeicht. Für dieses Eichnormal bietet die Erfindung eine Messmöglichkeit basierend auf der gravimetrischen Messung. Ein solches Eichnormal ist unabdingbar für die Ersteichung (und ggf. auch für regelmäßige Überprüfungen bzw. Nacheichungen) von Wasserstoffbetankungsanlagen. Die Erfindung ist selbstverständlich auch außerhalb von behördlichen Eichungen zur Kalibration von entsprechenden Durchflussmessungen, nicht nur bezogen auf Wasserstoff, verwendbar.

## Patentansprüche

1. Verfahren zur Kalibration einer Durchflussmessung zur Ermittlung einer Menge eines Fluids,
wobei eine Masse des der Durchflussmessung unterworfenen Fluids gravimetrisch bestimmt wird und mit einem Ergebnis der Durchflussmessung verglichen wird,
**dadurch gekennzeichnet, dass**
die gravimetrische Bestimmung innerhalb eines abgeschlossenen Messraums durchgeführt wird,
wobei der abgeschlossene Messraum während der gravimetrischen Bestimmung mit einem Inertgas gefüllt ist, und
das der Durchflussmessung unterworfene Fluid in einen oder mehrere, der gravimetrischen Bestimmung unterworfene Fluidbehälter in dem Messraum eingeleitet wird.

2. Verfahren nach Anspruch 1, wobei der abgeschlossene Messraum einen höheren Druck als eine den geschlossenen Messraum umgebende Atmosphäre aufweist.

3. Verfahren nach Anspruch 1 oder 2, wobei das Inertgas ein Edelgas und/oder Stickstoff umfasst.

4. Verfahren nach Anspruch 1, 2 oder 3, wobei der geschlossene Messraum vor und/oder während und/oder nach der gravimetrischen Bestimmung mit dem Inertgas gespült wird.

5. Verfahren nach einem der vorstehenden Ansprüche, wobei das Fluid Wasserstoff umfasst oder aus Wasserstoff besteht.

6. Verfahren nach einem der vorstehenden Ansprüche, wobei die gravimetrische Bestimmung mit einer gravimetrischen Messeinheit durchgeführt wird, die einen Messfehler von weniger als 3%, 1%, 0,3%, 0,1% oder 0,01%, jeweils bezogen auf die Menge des Fluids, aufweist.

7. Verfahren nach einem der vorstehenden Ansprüche, wobei ein Ergebnis der Durchflussmessung auf Basis eines Ergebnisses des Vergleichs mit der gravimetrischen Bestimmung so angepasst wird, dass eine Abweichung zwischen dem Ergebnis der gravimetrischen Bestimmung und einem Ergebnis der Durchflussmessung minimiert wird.

8. System zur Kalibration einer Durchflussmessung zur Ermittlung einer Menge eines Fluids, wobei das System für die Durchflussmessung mit einer Durchflussmesseinrichtung und für die Kalibration mit einer zur gravimetrischen Bestimmung der Menge des Fluids mit einer gravimetrischen Messeinheit, die dazu eingerichtet ist, eine Masse eines oder mehrerer Fluidbehälter zu bestimmen, ausgestattet ist,
**gekennzeichnet durch**
einen geschlossenen Messraum, der die gravimetrische Messeinheit umschließend angeordnet ist, und
eine Gaseinspeiseeinrichtung, die dazu eingerichtet ist, den geschlossenen Messraum mit einem Inertgas zu beaufschlagen, während die gravimetrische Messeinheit eine Massenbestimmung durchführt.

9. System nach Anspruch 8, ferner umfassend eine Recheneinheit, die dazu eingerichtet ist, erste Messdaten von der gravimetrischen Messeinheit sowie zweite Messdaten von der Durchflussmesseinrichtung zu empfangen und miteinander zu vergleichen.

10. System nach Anspruch 9, wobei die Recheneinheit ferner dazu eingerichtet ist, die Durchflussmesseinrichtung so zu kalibrieren, dass eine Abweichung zwischen den ersten und zweiten Messdaten minimiert wird.

11. System nach einem der Ansprüche 8 bis 10, ferner umfassend Mittel, die das System zur Durchführung eines Verfahrens nach einem der Ansprüche 1 bis 7 ertüchtigen.
